# EUROPÄISCHE PATENTSCHRIFT

(11) **EP 1 063 257 B1**
(45) Veröffentlichungstag und Bekanntmachung des Hinweises auf die Patenterteilung: **07.09.2005**
(21) Anmeldenummer: 00110126.0
(22) Anmeldetag: 10.05.2000
(51) Int. Cl.: C08K 5/11

(54) **PVC-haltiges Material**
Material containing PVC
Matériau contenant PVC

(30) Priorität: 21.06.1999 DE 19928239
(43) Veröffentlichungstag der Anmeldung: 27.12.2000
(73) Patentinhaber: ERA BESCHICHTUNG GmbH & CO. KG, 31592 Stolzenau (DE)
(72) Erfinder: Keller, Maik Johannes, 31582 Nienburg (DE)
(74) Vertreter: Winkler, Andreas Fritz Ernst

(56) Entgegenhaltungen:
- US-A- 2 956 855
- US-A- 3 928 275
- US-A- 3 929 712
- PRESCOTT ET AL.: "citric acid ester plasticizers" MODERN PLASTICS, Oktober 1952 (1952-10), Seite 134,136,138200,201 XP000915351

## Beschreibung

Die Erfindung betriff ein zwei-oder mehrschichtiges Flächengebilde aus PVC-haltigem Material.

Polyvinylchlorid (PVC) gehört zu den wirtschaftlich bedeutendsten Polymeren. Es findet als Hart-PVC, insbesondere aber als Weich-PVC, vielfältige Anwendung.

Zur Erzeugung eines Weich-PVCs werden dem PVC Weichmacher zugesetzt, wobei technisch als Weichmacher bevorzugt Phthalsäureester eingesetzt werden. Phthalate sind in den letzten Jahren jedoch zunehmend kritischer beurteilt worden, insbesondere aufgrund ihres physiologischen Verhaltens. Phthalate zeigen eine gewisse Stabilität gegenüber physikalischchemischen und biologischen Abbaureaktionen. Zwar ist die akute Toxizität der Phthalate im allgemeinen gering, jedoch wirken die überwiegend eingesetzten Nonyl-, Decyl- und Undecylphthalate bei hoher Dosierung an Ratten und Mäusen carzinogen, teratogen und embryotoxisch. Phthalate werden aufgrund ihres schlechten Abbauverhaltens insbesondere im Lebergewebe des Körpers angereichert.

Die physiologische Bedenklichkeit der Phthalate in Verbindung mit PVC zeigt sich insbesondere bei deren gemeinsamen Verbrennungsprodukten. Durch den Gehalt an Aromaten rußen zum einen die Verbrennungsprodukte stark, zum anderen wird durch die Anwesenheit von Chlor eine Dioxinbildung begünstigt. Hohe Rauchdichten entstehen außerdem durch die oft erforderliche Verwendung von Antimontrioxid. Flammschutzmittel auf Carbonat-Basis, die zudem eine kritische Chlorwasserstoff-Emission einschränken können, wirken nicht sehr effektiv, da die erforderlichen Mengen so groß sind, daß eine erhebliche Verschlechterung der physikalischen Kennwerte auftritt, die eine Anwendung der Carbonate ausschließt.

Aus gleichem Grunde ist der Einsatz von Hydroxiden wie beispielsweise Aluminiumhydroxid und Magnesiumhydroxid, die ebenfalls im Brandfall eine niedrigere Rauchdichte ergeben, nur eingeschränkt möglich.

Die ökologische Bedenklichkeit der phthalathaltigen PVC-Materialien resultiert-insbesondere aus einem schlechten Recycling- und Entsorgungsverhalten. Bei einer Entsorgung in Verbrennungsanlagen ergeben der bereits erwähnte hohe Rußanteil und die mögliche Dioxinbildung bei der Verwendung von Phthalaten erhebliche Probleme. Hinsichtlich des frei werdenden Chlorwasserstoffs, der bei der Verbrennung des PVC entsteht, bieten moderne Anlagenkonzepte eine Rückgewinnungsmöglichkeit. Aufgrund der Stabilität gegenüber Mikroorganismen scheiden biologische und biochemische Abbauverfahren aus.

Neben der physiologischen und ökologischen Bedenklichkeit der phthalathaltigen PVC-Materialien weisen diese zudem verbesserungsfähige physikalische Kennwerte auf. Insbesondere das Fogging, d.h. der flüchtige Anteil, den das PVC-haltige Material innerhalb einer bestimmten Zeit bei einer bestimmten Temperatur verliert, sowie die Migration, d.h. der Masseverlust des PVC-haltigen Materials bei dessen Lagerung auf Aktivkohle für eine bestimmte Zeit bei einer bestimmten Temperatur, können noch verbessert werden. Versprödung, Kälteflexibilität, Brennrate und Lichtbeständigkeit sind weitere wichtige Kenngrößen.

Aus der DE 35 46 725 C2 und der DE 35 20 750 C2 sind Polyvinylchloridzusammensetzungen mit Citratestern als Weichmacher und Verfahren zu deren Herstellung bekannt. Dabei werden ausschließlich Citratester verwendet, bei denen auch die Hydroxylgruppe der Citronensäure verestert ist. Die vollständig veresterten Citronensäurester sind verhältnismäßig teuer.

Aus dem "Handbuch der PVC-Additive", Ciba-Geigy Marienberg GmbH, 1971, S. 114, 115, 120-125 ist die Verwendung von PVC im Spritzguß sowie im Streichverfahren bekannt, wobei das PVC-Material stets Phthalat als Weichmacher enthält.

Aus der EP-A-0 138 147 ist ein Blutbeutelsystem bekannt, wobei der Blutbeutel aus Polyvinylchloridfolie mit einem Weichmacher auf Citratesterbasis hergestellt ist. Der Blutbeutel ist aus einer einzigen Folienschicht gebildet und für den als Weichmacher verwendeten Citratester werden ausschließlich nicht-gemischte Alkoholkomponenten verwendet.

In "Plast Massy 5" (1969), S. 20 und 21, sind polymere Verpackungsmaterialien auf PVC-Basis beschrieben, die für Lebensmittel, medizinische Zwecke und Haushaltsgeräte geeignet und aus lediglich einer PVC-Schicht aufgebaut sind. Zitronensäureester, bei denen unterschiedliche Alkoholkomponenten in einem Estermolekül verestert sind, und PVC-Material, bei dem der Gehalt an Zitronensäureester im Bereich von 35 bis 65 Gew.-% liegt, werden nicht offenbart.

Zur Vermeidung der beschriebenen Risiken und Nachteile wurden einerseits Versuche unternommen, alternative Weichmacher zu entwickeln, andererseits wurde auch versucht, PVCfreie Polymere zu entwickeln, die ohne Weichmacher verwendet werden können.

Bedeutung erlangten hierbei Materialien aus thermoplastischen Polyolefinen (TPO) und aus Polyurethanen (PUR). Die Einstellung der Flammwidrigkeit erforderte bei diesen Materialien jedoch aufwendige Modifizierungen, der Herstellungs- als auch der Verarbeitungsprozeß gestaltete sich komplizierter und aufwendiger. In speziellen Fällen enthielt das Endprodukt nur 50 % der ursprünglichen Polymermatrix. Thermoplastische Polyolefine und Polyurethane mit erforderlichen Eigenschaften sind zudem etwa doppelt so teuer wie entsprechende PVC-Produkte.

Als Ersatz für die oben diskutierten Phthalate als Weichmacherzusätze für PVC wurden Adipinsäureester sowie Phosphorsäureester untersucht. Diese Ester sind aromatfrei, daher treten die kritischen Verbrennungsprodukte hier nicht auf. Jedoch zeigen diese Ester deutlich schlechtere Kennwerte bei wesentlichen Produktparametern. Zudem ist deren Verarbeitung deutlich schwieriger, der Preis ist gegenüber phthalathaltigen PVC-Materialien erhöht.

Der Erfindung liegt die Aufgabe zugrunde, ein zwei-oder mehrschichtiges Flächengebilde aus PVC-haltigem Material bereitzustellen, welches nicht die Nachteile des Standes der Technik zeigt und insbesondere die physiologische und ökologische Verträglichkeit steigert, verbesserte physikalische Kennwerte aufweist und mit herkömmlichen Herstellungs- und Verarbeitungsverfahren bearbeitbar und zudem preiswert ist.

Erfindungsgemäß wird die Aufgabe durch ein Flächengebilde nach Anspruch 1 gelöst. Weitere Ausführungsformen ergeben sich aus den Unteransprüchen.

Im Vergleich zu Phthalsäureestern weisen Citronensäureester eine hervorragende Verträglichkeit bei der Aufnahme durch den Organismus auf. Die Ester werden in die jeweiligen Alkohole und die völlig unbedenkliche Citronensäure gespalten. Eine Anreicherung im Organismus findet daher nicht statt. Durch den fehlenden Aromatenanteil ergibt sich zusätzlich eine erheblich geringere Rußbildung. Ebenso fehlt damit ein wesentlicher Reaktionpartner für die besonders kritische Dioxinbildung. Im Vergleich zu Alternativmaterialien weist ein PVChaltiges Material unter Verwendung von Citronensäureestern als Weichmacherzusatz ein deutlich besseres Preis-Leistungs-Verhältnis auf.

Höchst bevorzugt liegt die Kettenlänge der Alkoholkomponente des Citronensäureesters im Bereich von C₆-C₁₀.

Bei der Alkoholkomponente kann es sich um lineare Alkohole, aber auch um verzweigte Alkohole, ggf. auch um polyfunktionelle Alkohole handeln.

Zweckmäßig umfaßt das PVC-haltige Material Stabilisatoren mit einem Anteil von 1 bis 5 Gew.-%.

Besonders zweckmäßig umfassen die Stabilisatoren Calcium/Zink- oder Barium/Zink-Verbindungen.

Vorteilhaft umfaßt das PVC-haltige Material Pigmente mit einem Anteil von 0 bis 15 Gew.-%.

Besonders bevorzugt umfaßt das PVC-haltige Material Flammschutzmittel in einem Bereich von 0 bis 20 Gew.-%.

Besonders zweckmäßig umfassen die Flammschutzmittel Aluminium- und/oder Magnesiumhydroxide. Selbstverständlich können auch andere übliche Flammschutzmittel, wie bspw. Antimontrioxid verwendet werden.

Vorteilhaft umfaßt das PVC-haltige Material Treibmittel, z.B. Azodicarbonamid, in einem Bereich von 0,1 bis 2 Gew.-%. Andere übliche Treibmittel können ebenfalls zum Einsatz kommen.

Ferner ist vorgesehen, daß das PVC-haltige Material in Form einer Schaumfolie vorliegt, die mit an sich bekannten Verfahren herstellbar ist.

Besonders bevorzugt ist, daß das PVC-haltige Material als eine verstärkte Schaumfolie vorliegt, die durch Beschichtung von Trägermaterialien mit an sich bekannten Verfahren herstellbar ist.

Dabei ist das Trägermaterial vorzugsweise ein textiles Gewebe, Gewirke, Vlies, Metallfolie und/oder Folie und/oder Schaum aus anderem Polymermaterialien.

Das erfindungsgemäße Flächengebilde kann durch ein spreichverfahren hergestellt werden.

Damit die Erfindung leichter verstanden werden kann und deren weitere Merkmale deutlich werden können, wird die Erfindung im folgenden anhand einiger Beispiele beschrieben.

### Beispiel 1

Ein Citronensäureester wird aus Citronensäure und Alkoholen mit einem Kettenlängenbereich von C₆-C₁₀ hergestellt. Unter Anwendung eines üblichen Mischaggregates wird PVC-Material (z.B. aufbereitetes PVC als Regenerat) in den Citronensäureester eingemischt. Dabei werden vorzugsweise Massenanteile von 35 bis 65 % eingestellt. Weiterhin werden die in Plastisolen üblicherweise enthaltenen Zusatzstoffe zugesetzt, z.B. Stabilisatoren vorzugsweise auf Basis von Calcium/Zink-Verbindungen mit Massenanteilen von vorzugsweise 1 bis 5 %, Pigmente mit Massenanteilen von vorzugsweise 0 bis 15 %, sowie als Flammschutzmittel wirksame Substanzen, wie z.B. Al(OH)₃, Mg(OH)₂ und Mineralien; die Magnesium/Calcium-Carbonate und ggf. chemisch gebundenes Wasser enthalten, vorzugsweise in Massenanteilen von 0 bis 20%.

### Beispiel 2

Die nach Beispiel 1 hergestellte Zusammensetzung wird so eingestellt, daß eine für ein Streichverfahren geeignete Viskosität erhalten wird.

Ein Teil dieser Zusammensetzung wird entlüftet und unmittelbar zur Verarbeitung für ein übliches Plastisolstreichverfahren bereitgestellt. Dieser Teil wird im nachfolgenden "Obergrund" genannt. In einen weiteren Teil dieser Zusammensetzung wird als geeignetes Treibmittel Azodicarbonamid mit Massenanteilen von 0,1 bis 2 % eindispergiert. Dieser Teil wird ebenfalls entlüftet und zur Verarbeitung im Streichverfahren bereitgestellt. Dieser Teil wird im folgenden "Schaumstrich" genannt. Ein weiterer Teil der nach Beispiel 1 hergestellten Zusammensetzung wird durch Zugabe des beschriebenen Citronensäureesters in einem geeigneten Mischaggregat derart verdünnt, daß eine Verarbeitung durch Rastern möglich wird. Dieser Teil wird im folgenden als "Kaschierstrich" bezeichnet. Die hergestellten Zusammensetzungen werden auf einer für das indirekte Streichen typischen Beschichtungsanlage zur Herstellung eines Kunstleders eingesetzt.

Dabei erfolgt der Aufstrich des Obergrundes auf Release-Papier mit einer Dicke von vorzugsweise 0,1 bis 0,8 mm durch ein Rakelmesser oder Reverse-Roll-Coater. In einem Trokkenkanal erfolgt bei Lufttemperaturen von vorzugsweise 120 bis 230°C und Arbeitsgeschwindigkeiten von vorzugsweise 3 bis 50 m/min eine Teilgelierung. Nach Rückkühlung an einer Kühlwalzenanordnung erfolgt auf diesem verfestigten Strich der Aufstrich des Schaumstrichs mit einer Dicke von vorzugsweise 0,1 bis 0,8 mm. Mit Lufttemperaturen von- vorzugsweise 120 bis 250°C erfolgt in einem weiteren Trockenkanal wahlweise ein Vorgelieren, Anschäumen oder vollständiges Aufschäumen.

Nach anschließendem Rückkühlen erfolgt das Aufrastern des Kaschierstrichs mit einer Menge von vorzugsweise 30 bis 200 g/m² unter Anwendung einer entsprechenden Rasterwalze auf den verfestigten Vorstrich, den Schaumstrich.

In diese Schicht wird ein elastisches Gewirke mit einem Flächengewicht von vorzugsweise 50 bis 160 g/m² eingelegt. Um einen festen Verbund zu gewährleisten, durchläuft diese Anordnung einen Walzenspalt.

In einem dritten Trockenkanal erfolgt bei Lufttemperaturen von vorzugsweise 140 bis 250°C das Ausgelieren des letzten Masseauftrages, sowie das endgültige Gelieren der vorangehenden Schichten und das vollständige Aufschäumen der vorangehenden Materialschicht.

Nach Abkühlung und Entformung vom Release-Papier erfolgt auf einer üblichen Rasteranlage der Auftrag von vorzugsweise 1 bis 5 Schichten eines üblichen PVC-Acrylatlackes mit einer Auflage von vorzugsweise 5 bis 30 g/m², Naß/Schicht zum Verschleißschutz oder zur Dekorgestaltung der PVC-Deckschicht.

Auf dieses derartig gestaltete Material wird mit einem für die PVC-Weich-Verarbeitung typisehen Prägekalander durch eine Prägewalze eine Oberflächenstruktur aufgebracht, die eine Lederoberfläche nachbildet. Dabei werden Oberflächentemperaturen von vorzugsweise 120 bis 240°C auf dem PVC beim Durchlauf einer Heizwalze und Strahleranordnung erzeugt, während die durch den wirksamen Druck in die plastifizierte Oberfläche eingebrachte Narbe durch die Kühlung der Prägewalze selbst und einer nachfolgenden Anordnung von Kühlwalzen verfestigt wird.

Nach Konfektionierung steht ein Kunstleder bereit, das als Teil eines Sitzbezuges im Automobilinnenraum oder als Möbelkunstleder Anwendung finden kann. Wird zur Herstellung ein Gewirke mit sehr hohem Dehnvermögen eingesetzt und das Material nachträglichmikroperforiert, kann es im sogenannten Woodstock-Verfahren unmittelbar auf entsprechende Trägerteile, z.B. Türverkleidungen im Automobilinnenraum, aufkaschiert werden.

Das citrathaltige PVC-haltige Material wurde unter speziellen Prüfbedingungen untersucht. Die Ergebnisse sind unten in Tabelle 1 aufgeführt, welche zum Vergleich entsprechende Ergebnisse für ein phthalathaltiges PVC-Material auflistet. Unter der Prüfung des Foggings wird die Messung des Anteils der flüchtigen Bestandteile des PVC-haltigen Materials verstanden, welchen das PVC-haltige Material in einer Zeitdauer von 16 Stunden bei einer Temperatur von 100°C verliert. Die Migration beschreibt den Masseverlust des PVC-haltigen Materials bef deren Lagerung auf Aktivkohle für eine Zeitdauer von 24 Stunden bei einer Temperatur von 90°C. Masseverlust beschreibt den Verlust an Masse des PVC-haltigen Materials bei einer Temperatur von 90°C in einem Zeitraum von 168 Stunden. Unter Versprödung wird die Reduktion der Reißdehnung bei einer Temperatur von 90°C in einem Zeitraum von 168 Stunden verstanden. Die Kälteflexibilität gibt an, bis zu welcher Temperature eine Flexibilität des PVC-haltigen Materials feststellbar ist. Die Brennrate beschreibt die Flammenausbreitungsgeschwindigkeit in dem PVC-haltigen Material ohne zusätzlicheFlammschutzmittel. Die Licht-beständigkeit beschreibt die Zeitdauer, nach welcher unter einer bestimmten UV-Belastung eine nach Graummaßstab feststellbare identische Vergilbung feststellbar ist.

**Tabelle 1**

| Prüfung | PVC-haltiges Material mit Citronensäureester mit C₆-C₁₀ | PVC-haltiges Material mit Phthalsäureester mit C₉-C₁₂ |
|---|---|---|
| Fogging | 0,3-0,6% | 0,6-2,0% |
| Migration | 1,0-2,0% | 3,0-5,0% |
| Masseverlust | 0,4-0,6% | 0,9-1,5% |
| Versprödung | Unverändert | 15% |
| Kälteflexibilität | -35°C | -30°C |
| Brennrate | ca. 15 mm/min | ca. 40 mm/min |
| Lichbeständigkeit | 120 h | 78 h |

Wie Tabelle 1 zu entnehmen ist, weist das citrathaltige PVC-haltige Material deutlich verbesserte physikalische Kennwerte im Vergleich zu phthalathaltigem PVC-Material auf. Hervorzuheben sind insbesondere die deutlich verringerte Migration, das Fehlen jeglicher Versprödung, sowie die stark reduzierte Brennrate.

### Beispiel 3

Ein Flächengebilde wird bis zum zweiten Strich analog Beispiel 2 hergestellt. Anstelle des dritten Auftrages mit Rasterwalzen erfolgt ein nochmaliger Auftrag eines zweiten Schaumstriches mit einer Dicke von 0, 1 bis 0,8 mm. Dieser Schaumstrich kann gegenüber dem Oberstrich oder gegenüber dem ersten Schaumstrich erheblich modifiziert sein.

Das vollständige Aufschäumen und Ausgelieren dieses Striches und der vorangehenden Striche erfolgt in dem nachfolgenden dritten Trockenkanal bei Lufttemperaturen von vorzugsweise 150 bis 250°C. Nach Abkühlung und Enformung von Release-Papier erfolgt wiederum auf einer üblichen Rasteranlage der-Auftrag von vorzugsweise 1 bis 5 Schichten eines üblichen PVC-Acrylatlackes oder eines Polyurethanlackes mit einer Auflage von vorzugsweise 5 bis 30 g/m² Naß/Schicht zum Verschleißschutz oder zur Dekorgestaltung der PVC-Schicht. Auf der Rückseite wird auf der gleichen oder einer weiteren Rasteranlage im gleichen oder in einem getrennten Durchlauf ein spezieller Haftlack mit vorzugsweise 1 bis 3 Schichten mit einer Auflage von vorzugsweise 8 bis 30 g/m² Naß/Schicht aufgetragen. Auf dieses derart gestaltete Material wird ebenfalls mit einem für die PVC-Weich-Verarbeitung typischen Prägekalander durch eine Prägewalze eine Oberflächenstruktur aufgebracht, die eine Lederoberfläche nachbildet. Dabei werden Oberflächentemperaturen von vorzugsweise 120 bis 250°C auf dem PVC beim Durchlauf einer Heizwalzen- und Strahleranordnung erzeugt, während die durch den wirksamen Druck in die plastifizierte Oberfläche eingebrachte Narbe durch die Kühlung der Prägewalze selbst und einer nachfolgenden Anordnung von Kühlwalzen verfestigt wird.

Dieses Flächengebilde kann als typische Schaumfolie auf Türverkleidungen, Armaturenbrettern oder sonstigen Paneelen durch Anwendung der üblichen-Tiefzieh- oder Tiefpreßverfahren aufkasehiert werden und weist ebenfalls die in Tabelle 1 aufgeführten, gegenüber einem phthalathaltigen PVC-Produkt deutlich verbesserten Eigenschaftsparameter auf.

### Beispiel 4

Ein Plastisol, das dem in Beispiel 2 dargestellten Obergrund-entspricht, wird unmittelbar zur Beschichtung im direkten Streichverfahren bereitgestellt.

Einem abgenommenen Teil dieser Zusammensetzung wird ein geeignetes Haftvermittlersystem äuf der Basis von vorvernetzten Isocyanaten zugesetzt. Auf einem Gewebe mit einem Flächengewicht von vorzugsweise 100 bis 250 g/m und einer Fadenzahl von vorzugsweise 6 bis 25/cm wird unter Verwendung eines üblichen Spannrahmens auf einer Luftrakelanordnung dieser Häftstrich mit einer Auflage von vorzugsweise 30 bis 100 g/m² aufgetragen.

Das aufgetragenen Plastisol wird in einem Trockenkanal bei Lufttemperaturen von vorzugsweise 120 bis 200°C und Arbeitsgeschwindigkeiten von vorzugsweise 5 bis 60 m/min vorgeliert. Das derart beschichtete Gewebe durchläuft ein Glättwerk und anschließend eine Kühlwalzenanordnung. Auf einer folgende Rakelmesseranordnung wird ein Folgestrich mit einer Auflage von vorzugsweise 50 bis 500 g/m² aufgebracht. In dem nachfolgenden zweiten Trokkenkanal wird bei Lufttemperaturen von vorzugsweise 120 bis 250°C und der vorgegebenen Arbeitsgeschwindigkeit die endgültige Gelierung des Vorstrichs und die Gelierung des aufgebrachten Strichs vorgenommen. Wiederum erfolgt der Durchlauf eines Glättwerks und einer Kühlwalzenanordnung. Nachfolgend wird auf einem Rasterwerk, das unmittelbar der Beschichtungsanlage nachgeordnet ist, eine Lackschicht aufgebraucht.

Das erhaltene Flächengebilde kann als einseitig beschichtete Abdeckplane eingesetzt werden und weist ebenfalls die in Tabelle 1 aufgeführten Kennwerte auf.

### Beispiel 5

Ein nach Beispiel 4 hergestelltes Flächengebilde wird auf der unbeschichteten Rückseite völlig gleichartig entsprechend Beispiel 3 beschichtet. Das somit vervollständigte Flächengebilde. wird als LKW-Plane oder Zeltplane konfektioniert, und weist die in Tabelle 1 aufgeführten Kennwerte auf. Die toxikologische Unbedenklichkeit des Citronensäureesters ermöglicht die Verwendung demnach Beispiel 5 hergestellten Plane insbesondere als LKW-Plane für Transport von Lebensmitteln. Für solche Transporte erweist sich ebenfalls die bereits in Tabelle 1 aufgeführte Lichtbeständigkeit als enormer Vorteil.

### Beispiel 6

Ein Flächengebilde wird entsprechend Beispiel 4 mit spezieller Rezepturgestaltung zur Anwendung im PKW-Innenraum hergestellt und durch Aufbringen einer zusätzlichen Lackschicht auf der Nutzschicht ergänzt. Gleichfalls wird eine Narbung mit einem üblichen Prägekalander, wie in Beispiel 2 gezeigt, aufgebracht.

Das so erstellte Flächengebilde kann als Laderaumabdeckung in Kombifahrzeugen eingesetzt werden.

### Beispiel 7

Ein Obergrund in der stofflichen Zusammensetzung entsprechend Beispiel 2, jedoch in einem Punkt durch die bevorzugte Anwendung von Suspensions-PVC abweichend, wird in einem geeigneten Reaktor geliert und anschließend als plastifizierte Masse granuliert. Diesem Granulat wird entsprechendes Mahlgut zugesetzt, das aus Zuschnittsabfällen von Materialien, die nach Beispiel 3 hergestellt wurden, gewonnen wurde. Gleichfalls können modifizierende Polymere in geeigneter Granulatform zugesetzt werden. Dieses Gemisch wird in einem Extruder plastifiert. Über eine Breitschlitzdüse wird eine Folie ausgetragen. Diese Folie wird durch nachträgliches Aufkaschieren eines Gewirkes und folgender Verarbeitung entsprechend Beispiel 2 zu einem Kompaktkunstleder komplettiert. Das Kaschieren erfolgt in Abwandlung von Beispiel 2, indem anstelle des Warenaufbaus von Release-Papier, Oberstrich und Schaum die vorab beschriebene Folie in das Rasterwerk einer zu Beispiel 2 vergleichbaren Maschmenanordnung einläuft. Das erhaltene Produkt weist die in Tabelle 1 aufgeführten Kennwerte auf.

In Abwandlung zum obigen Verfahren ist es auch denkbar, ein Kompaktkunstleder unter Anwendung einer gleichartigen Folie, die jedoch unter Anwendung eines analogen Rohstoffgemischers mittels Extrusion und Durchlauf durch einen Sehmelzwalzenkalander hergestellt worden ist, zu erstellen. Ebenfalls ist es möglich, eine nach obigen Verfahren hergestellte Folie mit Rastern auf der Vorder- und Rückseite und Prägen so nachzubehandeln, wie es in Beispiel 3 dargestellt ist. Eine solche Folie ist bei Darstellung abweichender, Holz entsprechender Oberflächenstrukturen als Möbeldekorfolie einsetzbar. Ebenso kann sie bei angepaßter Oberflächengestaltung als in der Automobilinnenausstattung übliche Sonnenblendfolie eingesetzt werden.

Die in der vorstehenden Beschreibung und in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Zwei- oder mehrschichtiges Flächengebilde aus PVC-haltigem Material, **dadurch gekennzeichnet, daß** das PVC-haltige Material einen Citronensäureester als Weichmacher umfaßt, bei dem die Hydroxylgruppe des Citronensäureesters nicht verestert ist, wobei die Alkoholkomponente eine Mischung aus verschiedenen Alkoholen mit einem Kettenlängenbereich von C₅-C₁₂ umfaßt und der Anteil des Citronensäureesters 35 bis 65 Gew.-% umfaßt.

2. Zwei- oder mehrschichtiges Flächengebilde nach Anspruch 1, **dadurch gekennzeichnet, daß** die Kettenlänge der Alkoholkomponente des Citronensäureesters im Bereich von C₆-C₁₀ liegt.

3. Zwei- oder mehrschichtiges Flächengebilde nach Anspruch 1 oder 2, **dadurch gekennzeichnet, daß** die Alkoholkomponente lineare Alkohole umfaßt.

4. Zwei- oder mehrschichtiges Flächengebilde nach Anspruch 1 oder 2, **dadurch gekennzeichnet, daß** die Alkoholkomponente verzweigte Alkohole umfaßt

5. Zwei- oder mehrschichtiges Flächengebilde nach einem der vorangehenden Ansprüche, **dadurch gekennzeichnet, daß** die Alkoholkomponente polyfunktionelle Alkohole umfaßt.

6. Zwei- oder mehrschichtiges Flächengebilde nach einem der vorangehenden Ansprüche, **dadurch gekennzeichnet, daß** das PVC-haltige Material Stabilisatoren mit einem Anteil von 1 bis 5 Gew.-% umfaßt.

7. Zwei- oder mehrschichtiges Flächengebilde nach Anspruch 6, **dadurch gekennzeichnet, daß** die Stabilisatoren Calcium/Zink- oder Barium/Zink-Verbindungen sind.

8. Zwei- oder mehrschichtiges Flächengebilde nach einem der vorangehenden Ansprüche, **dadurch gekennzeichnet, daß** das PVC-haltige Material Pigmente mit einem Anteil von 0 bis 15 Gew.-% umfaßt.

9. Zwei- oder mehrschichtiges Flächengebilde nach einem der vorangehenden Ansprüche, **dadurch gekennzeichnet, daß** das PVC-haltige Material Flammschutzmittel in einem Bereich von 0 bis 20 Gew.-% umfaßt.

10. Zwei- oder mehrschichtiges Flächengebilde nach Anspruch 9, **dadurch gekennzeichnet, daß** die Flammschutzmittel Aluminium- und/oder Magnesiumhydroxide sind.

11. Zwei- oder mehrschichtiges Flächengebilde nach einem der vorangehenden Ansprüche, **dadurch gekennzeichnet, daß** zumindest eine Schicht des PVC-haltigen Materials Treibmittel in einem Bereich von 0,1 bis 2 Gew.-% umfaßt.

12. Zwei- oder mehrschichtiges Flächengebilde nach Anspruch 11, **dadurch gekennzeichnet, daß** das Treibmittel Azodicarbonamid ist.

13. Zwei- oder mehrschichtiges Flächengebilde nach einem der vorangehenden Ansprüche, **dadurch gekennzeichnet, daß** das PVC-haltige Material in Form einer Schaumfolie vorliegt, die mit an sich bekannten Verfahren herstellbar ist.

14. Zwei oder mehrschichtiges Flächengebilde nach Anspruch 13, **dadurch gekennzeichnet, daß** das PVC-haltige Material als eine verstärkte Schaumfolie vorliegt, die durch Beschichtung von Trägermaterialien mit an sich bekannten Verfahren herstellbar ist.

15. Zwei- oder mehrschichtiges Flächengebilde nach Anspruch 14, **dadurch gekennzeichnet, daß** das Trägermaterial ein textiles Gewebe, Gewirke, Vlies, Metallfolie und/oder Folie und/oder Schaum aus anderen Polymermaterialien ist.

16. Zwei- oder mehrschichtiges Flächengebilde nach einem der Ansprüche 1 bis 12, **dadurch gekennzeichnet, daß** es durch ein Streichverfahren herstellbar ist.

## Claims

1. A fabric with two or more layers, made of material containing PVC, **characterized in that** the material containing PVC includes a citric acid ester as the softener, in which the hydroxyl group of the citric acid ester is not esterified, wherein the alcohol component includes a mixture of various alcohols with a chain length range of C₅-C₁₂ and the proportion of the citric acid ester is between 35% and 65% by weight.

2. A fabric with two or more layers as in Claim 1, **characterized in that** the chain length of the alcohol component of the citric acid ester is in the range C₆-C₁₀.

3. A fabric with two or more layers as in Claim 1 or 2, **characterized in that** the alcohol component includes linear alcohols.

4. A fabric with two or more layers as in Claim 1 or 2, **characterized in that** the alcohol component includes branched alcohols.

5. A fabric with two or more layers as in any one of the preceding claims, **characterized in that** the alcohol component includes polyfunctional alcohols.

6. A fabric with two or more layers as in any one of the preceding claims, **characterized in that** the material containing PVC includes stabilizers in a proportion of 1% to 5% by weight.

7. A fabric with two or more layers as in Claim 6, **characterized in that** the stabilizers are calcium/zinc or barium/zinc compounds.

8. A fabric with two or more layers as in any one of the preceding claims, **characterized in that** the material containing PVC includes pigments in a proportion of 0% to 15% by weight.

9. A fabric with two or more layers as in any one of the preceding claims, **characterized in that** the material containing PVC includes flame-retardant agents in a range of 0% to 20% by weight.

10. A fabric with two or more layers as in Claim 9, **characterized in that** the flame-retardant agents are aluminium hydroxides and/or magnesium hydroxides.

11. A fabric with two or more layers as in any one of the preceding claims, **characterized in that** at least one layer of the material containing PVC includes a blowing agent in a range of 0.1% to 2% by weight.

12. A fabric with two or more layers as in Claim 11, **characterized in that** the blowing agent is azodicarbonamide.

13. A fabric with two or more layers as in any one of the preceding claims, **characterized in that** the material containing PVC is in the form of a foam film which can be manufactured using conventional methods.

14. A fabric with two or more layers as in Claim 13, **characterized in that** the material containing PVC is a reinforced foam film which can be produced by coating carrier materials using conventional methods.

15. A fabric with two or more layers as in Claim 14, **characterized in that** the carrier material is a textile woven fabric, knit fabric, non-woven fleece, metal foil and/or sheet and/or foam made from other polymer materials.

16. A fabric with two or more layers as in any one of Claims 1 to 12, **characterized in that** it can be produced by means of spread coating.

## Revendications

1. Structure surfacique bi- ou multicouches constituée d'un matériau contenant du PVC, **caractérisée en ce que** le matériau contenant du PVC comprend un ester de l'acide citrique en tant que plastifiant, dans lequel le groupe hydroxyle de l'ester de l'acide citrique n'est pas estérifié, sachant que le composant alcool comprend un mélange de différents alcools de longueur de chaîne de C₅ à C₁₂ et la proportion de l'ester de l'acide citrique est de 35 à 65 % en poids.

2. Structure surfacique bi- ou multicouches selon la revendication 1, **caractérisée en ce que** la longueur de chaîne du composant alcool de l'ester de l'acide citrique se situe dans la plage de C₆ à C₁₀.

3. Structure surfacique bi- ou multicouches selon la revendication 1 ou la revendication 2, **caractérisée en ce que** le composant alcool comprend des alcools linéaires.

4. Structure surfacique bi- ou multicouches selon la revendication 1 ou la revendication 2, **caractérisée en ce que** le composant alcool comprend des alcools ramifiés.

5. Structure surfacique bi- ou multicouches selon l'une quelconque des revendications précédentes, **caractérisée en ce que** le composant alcool comprend des alcools polyfonctionnels.

6. Structure surfacique bi- ou multicouches selon l'une quelconque des revendications précédentes, **caractérisée en ce que** le matériau contenant du PVC comprend des stabilisants avec une teneur de 1 à 5 % en poids.

7. Structure surfacique bi- ou multicouches selon la revendication 6, **caractérisée en ce que** les stabilisants sont des composés à base de calcium/zinc ou de baryum/zinc.

8. Structure surfacique bi- ou multicouches selon l'une quelconque des revendications précédentes, **caractérisée en ce que** le matériau contenant du PVC comprend des pigments avec une teneur de 0 à 15 % en poids.

9. Structure surfacique bi- ou multicouches selon l'une quelconque des revendications précédentes, **caractérisée en ce que** le matériau contenant du PVC comprend des agents retardateurs de flamme avec une teneur de 0 à 20 % en poids.

10. Structure surfacique bi- ou multicouches selon la revendication 9, **caractérisée en ce que** les agents retardateurs de flamme sont des hydroxydes d'aluminium et/ou de magnésium.

11. Structure surfacique bi- ou multicouches selon l'une quelconque des revendications précédentes, **caractérisé en ce qu'**au moins une couche du matériau contenant du PVC comprend un agent d'expansion avec une teneur de 0,1 à 2 % en poids.

12. Structure surfacique bi- ou multicouches selon la revendication 11, **caractérisée en ce que** l'agent d'expansion est l'azodicarbonamide.

13. Structure surfacique bi- ou multicouches selon l'une quelconque des revendications précédentes, **caractérisée en ce que** le matériau contenant du PVC se présente sous la forme d'un film de mousse, qui peut être fabriqué avec des procédés connus en eux-mêmes.

14. Structure surfacique bi- ou multicouches selon la revendication 13, **caractérisée en ce que** le matériau contenant du PVC se présente sous la forme d'un film de mousse renforcée, qui peut être fabriqué en revêtant un matériau support avec des procédés connus en eux-mêmes.

15. Structure surfacique bi- ou multicouches selon la revendication 14, **caractérisée en ce que** le matériau support est un tissu textile, un tissu tricoté, un tissu molletonné, une feuille de métal et/ou un film et/ou une mousse d'autres matériaux polymères.

16. Structure surfacique bi- ou multicouches selon l'une quelconque des revendications 1 à 12, **caractérisée en ce qu'**elle est peut être fabriquée par un procédé d'enduction.
